# EUROPÄISCHE PATENTSCHRIFT

(11) **EP 2 436 992 B1**
(45) Veröffentlichungstag und Bekanntmachung des Hinweises auf die Patenterteilung: **02.08.2017**
(21) Anmeldenummer: 11182657.4
(22) Anmeldetag: 26.09.2011
(51) Int. Cl.: F24D 11/00, F24J 2/34, F28D 20/02, F24J 2/46, F28D 15/02, F28D 20/00

(54) **Speichereinrichtung für ein Heizsystem**
Storage device for a heating system
Dispositif de stockage pour un système de chauffage

(30) Priorität: 30.09.2010 DE 102010046985
(43) Veröffentlichungstag der Anmeldung: 04.04.2012
(73) Patentinhaber: Robert Bosch GmbH, 70442 Stuttgart (DE)
(72) Erfinder: Kosok, Juergen, 48565 Steinfurt (DE)

(56) Entgegenhaltungen:
- WO-A1-93/17292
- WO-A1-2007/139476
- JP-A- 57 052 795
- JP-A- 59 012 289
- JP-A- 59 134 488

## Beschreibung

Die Erfindung betrifft eine Speichereinrichtung zur Speicherung von Wärmeenergie in einem Heizsystem gemäß dem Oberbegriff des Anspruches 1..

Es sind Heizsysteme, bestehend aus einer Speichereinrichtung zur Speicherung von Wärmeenergie, mit einem Behältnis, in welchem sich ein Speichermedium und ein Kondensationseinrichtung befindet bekannt, bei denen die Kondensationseinrichtung zum Kondensieren von indem Behälter verdampfendem Speichermedium eine Kondensationsfläche aufweist, die mittels einer Kühlvorrichtung kühlbar ist. JP 59-134488 offenbart ein Verfahren zum Abführen von Wärmeenergie aus einer Speichereinrichtung zur Speicherung von Wärmeenergie in einem Heizsystem gemäß dem Oberbegriff des Anspruchs 1 und eine Speichereinrichtung zur Speicherung von Wärmeenergie in einem Heizsystem gemäß dem Oberbegriff des Anspruchs 5. Heizsysteme, beispielsweise solarthermische Systeme (Solaranlagen), werden gewöhnlich für die Warmwasserbereitung mit hohem solarem Deckungsanteil, aber auch für die Raumheizungsunterstützung eingesetzt. Sie liefern Wärmeenergie im niedrigen Temperaturbereich, d.h. bis maximal 100 °C. Im industriellen Bereich werden Solaranlagen mit meist mehr als 20 m² Kollektorfläche zur Produktion von Prozesswärme im Temperaturbereich von 100 °C oder darüber betrieben, etwa zur Beschleunigung biologischer und chemischer Prozesse bei der Biomasseverarbeitung, in der chemischen Industrie oder zur Aufheizung/ Vorwärmung von Luft.

Derartige Anlagen gehen im Sommer häufig in den Stillstand (Stagnation), weil das Angebot an Solarwärme die vorgesehene Speicherkapazität der Speichereinrichtung und den Wärmebedarf übersteigt.

Als Stagnation wird bei einem solarthermischen System der Zustand bezeichnet, bei dem es bei gleichzeitig hoher Solarstrahlung und ausgeschalteter Pumpe zur Verdampfung des Wärmeträgers im Kollektor kommt. Der Grund für den Stillstand der Solarkreispumpe ist meist ein voller Speicher. Es kann sich aber auch um einen technischen Defekt handeln. Das Verdampfen des Wärmeträgers ist zunächst prinzipiell vorgesehen und unkritisch. Problematisch im Stillstand sind jedoch einsetzende Zwei-Phasen-Strömungen, die im ungünstigsten Fall zu einer weiten Ausbreitung von Dampf und entsprechend hoher Temperaturbelastung im Solarkreis führen. Unter solchen Bedingungen werden innerhalb des Systems rasch Temperaturen von 200° C überschritten. Derart hohe Stillstandstemperaturen können jedoch zu einer thermischen Belastung des Solarkreises führen, die über die Beanspruchung des üblichen Betriebsfalles deutlich hinausgeht und im Extremfall Schäden an der Solaranlage verursachen kann. Sowohl die Armaturen (Membranausdehnungsgefäß, Pumpe, Ventile, Rohrdämmung) als auch das Wärmeträgermedium selbst sind dabei gefährdete Komponenten. Zusätzlich wird die Effektivität der Solaranlage negativ beeinträchtigt und deren Lebensdauer verkürzt.

Tritt Stagnation ein, muss das Kollektorfeld aus einem Temperaturbereich von etwa 200 °C auf circa 100 °C abgekühlt werden, bevor die Anlage wieder arbeiten kann. Dies gelingt jedoch nur bei abnehmender Strahlungsintensität und meist nur sehr langsam. Folglich ist oft erst am nächsten Tag ein erneuter solarer Ertrag möglich.

Der Erfindung liegt die Aufgabe zugrunde, diese und weitere Nachteile des Standes der Technik zu vermeiden und ein Verfahren zu entwickeln, das überschüssige Energie in einem Heizsystem aufnimmt und gezielt abführt, um das Auftreten von Stagnation in einem solarthermischen System zu verhindern. Das Verfahren soll mit einfachen Mitteln zuverlässig durchführbar und kostengünstig realisierbar sein. Es soll ferner die Effektivität des Heizsystems erhöhen und dessen Lebensdauer verlängern.

Der Erfindung liegt weiter die Aufgabe zugrunde, eine Speichereinrichtung zur Speicherung von Wärmeenergie zu schaffen, mit der das Auftreten von Stagnation in einem solarthermischen System wirksam verhindert wird. Die Speichereinrichtung soll mit einfachen Mitteln kostengünstig aufgebaut und leicht zu handhaben sein. Sie soll ferner die Effektivität des Heizsystems erhöhen und dessen Lebensdauer verlängern.

Erfindungsgemäß wird dies durch den Gegenstand von Patentanspruch 1 gelöst. Dieser sieht bei einem Verfahren zum Abführen von Wärmeenergie aus einem Heizsystem folgende Schritte vor:
▪ Einbringen von Wärmeenergie, die von dem Heizsystem gewonnen und/oder erzeugt worden ist, in ein Speichermedium, das in einem Behälter gespeichert wird, wobei das Speichermedium seine Verdampfungstemperatur erreicht oder überschreitet;
▪ Abgabe der von dem dampfförmigen Speichermedium aufgenommenen Wärmeenergie an den Behälter mittels Kondensation;
▪ Abgabe der von dem Behälter aufgenommenen Wärmeenergie an die Umgebung.
▪ Führung des dampfförmigen Speichermediums (32) entlang einer Innenfläche des Behälters (21), wobei das dampfförmige Speichermedium gezielt durch einen Strömungskanal, der zwischen einer Kondensationseinrichtung und einer hierzu beabstandeten Zwischenwand ausgebildet ist, geleitet wird und an der Kondensationseinrichtung kondensiert

Durch das Einbringen der von dem Heizsystem gewonnenen und/oder erzeugten Wärmeenergie in das Speichermedium wird die Wärmeenergie zunächst gespeichert. In einer Phase mit hoher Speichertemperatur, die den Grenzwert der Verdampfungstemperatur des Speichermediums erreicht oder überschreitet, beginnt das Speichermedium innerhalb des Behälters zu verdampfen, d.h. die Verdampfungswärme des Speichermediums wird genutzt, um einen Phasenwechsel durchzuführen. Sobald das dampfförmige Speichermedium mit dem Behälter in Kontakt kommt, gibt es seine gewonnene Energie an den Behälter ab, der wiederum die aufgenommene Wärmeenergie an die Umgebung weiterleitet, so dass gezielt überschüssige Energie aus dem Heizsystem abgeführt wird. Das Speichermedium ist hierbei ein Transportmittel für überschüssige Wärmeenergie, die ansonsten innerhalb des Heizsystems zur Stagnation oder zu anderen Problemen führen würde, insbesondere dann, wenn die Speicherkapazität des Speichermediums erschöpft ist und die angeschlossenen Verbraucher aus der Speichereinrichtung keine Wärmeenergie entnehmen. Die gesamte thermische Belastung des Solarkreises wird reduziert. Schäden am System werden wirksam vermieden.

Das erfindungsgemäße Verfahren lässt sich beispielsweise mit einem drucklosen Speicherbehälter kostengünstig und zuverlässig realisieren, wobei der Speicherbehälter mit einem flüssigen Speichermedium, vorzugsweise Wasser, gefüllt wird und eine weitere Funktion übernimmt, namentlich die Übernahme der Wärmeenergie von dem dampfförmigen Speichermedium und die Abgabe der aufgenommenen Wärmeenergie an die Umgebung.

Das dampfförmige Speichermedium gibt seine Wärmeenergie mittels Kondensation an den Behälter ab. Hierzu wird das dampfförmige Speichermedium zweckmäßig an einer Innenfläche des Behälters entlang geführt. Durch die Kondensation wird dem Dampf innerhalb des Behälters auf einfache Weise Wärmeenergie entzogen. Diese wiederum wird über den Behälter nach außen abgeführt, so dass dem Heizsystem im Bedarfsfall Energie entzogen wird. Das Speichermedium kann jederzeit weiter Energie aufnehmen, sollte der Wärmeträger im Solarkreis aufgrund anhaltender Sonneneinstrahlung weiterhin Energie in den Speicher eintragen. Ein langwieriges Abkühlen des Systems ist nicht erforderlich. Dieses befindet sich vielmehr ständig in einer Art Stand-by-Modus.

Die Erfindung sieht weiter vor, dass das dampfförmige Speichermedium nach Abgabe der Wärmeenergie in den Behälter zurückgeführt wird. Dadurch bleibt das Speichermedium erhalten; es muss nicht nachgefüllt werden.

Um die Abgabe der Wärmeenergie von dem Behälter an die Umgebung gezielt steuern zu können, wird der Behälter passiv oder aktiv gekühlt. Im Falle der passiven Kühlung kommt das System gänzlich ohne Hilfsenergie aus, was sich weiter günstig auf die Betriebskosten auswirkt. Ferner wird durch die Kühlung die Aufnahmekapazität des Wärmespeichers und mithin dessen Effektivität weiter erhöht.

Von Vorteil ist ferner, wenn die Menge, der von dem dampfförmigen Speichermedium an den Behälter abgeführten Wärmeenergie geregelt und/oder gesteuert wird. Dadurch werden ungewollte Wärmeverluste aus dem System wirksam vermieden.

Eine weiter erfindungsgemäße Lösung, für die selbständiger Schutz beansprucht wird, betrifft eine Speichereinrichtung zur Speicherung von Wärmeenergie in einem solarthermischen System, mit einem Behälter, in dem ein Speichermedium bevorratet ist, und mit einer über dem Speichermedium angeordneten Kondensationseinrichtung, wobei die Kondensationseinrichtung zum Kondensieren von in dem Behälter verdampfendem Speichermedium eine Kondensationsfläche aufweist, die mittels einer Kühlvorrichtung kühlbar ist. Dabei wird zwischen dem Speichermedium (32) und der Kondensationsfläche (10) der Kondensationseinrichtung (100) eine Zwischenwand (26) angebracht, wobei die Zwischenwand (26) in einem Abstand zur Kondensationsfläche (10) des Behälters (21) angeordnet ist.

Mit der in der Speichereinrichtung integrierten Kondensationseinrichtung ist es möglich, Wärmeenergie, die von dem solarthermischen System erzeugt und über einen in einem Solarkreis zirkulierenden Wärmeträger in das Speichermedium eingebracht wird, auch dann noch aufzunehmen, wenn die Speicherkapazität des Speichermediums erschöpft ist und die angeschlossenen Verbraucher aus der Speichereinrichtung keine Wärmeenergie entnehmen. Dies wird dadurch erreicht, dass die Kondensationseinrichtung dem in dem Behälter bevorrateten Speichermedium bei Bedarf Wärmeenergie entzieht und über die Kühlvorrichtung an die Umgebung abgibt. Hierbei verdampft das Speichermedium zunächst innerhalb des Behälters. Anschließend kondensiert der entstandene Dampf an der Kondensationsfläche, wobei die von dem Wärmeträger übernommene Wärmeenergie an die Kühlvorrichtung abgegeben wird. Das an der Kondensationsfläche entstehende Kondensat verbleibt in dem Behälter und gelangt mittels Schwerkraft wieder zurück in das nicht verdampfte Speichermedium, so dass in der Gesamtbilanz kein Speichermedium verloren geht.

Der in dem Solarkreis zirkulierende Wärmeträger kann mit Hilfe der erfindungsgemäßen Speichereinrichtung seine Energie stets an das Speichermedium abgeben. Dadurch wird wirksam verhindert, dass der Wärmeträger innerhalb des Solar- bzw. Kollektorkreises verdampft. Folglich kann innerhalb des Systems keine Stagnation mehr entstehen, denn die überschüssige Energie wird über die Kondensationseinrichtung, die innerhalb der Speichereinrichtung eine Art Notkühlung bildet, an die Umgebung abgegeben. Das solarthermische System kann daher nicht mehr in einen Stillstand übergehen und die Temperaturen innerhalb des Systems bleiben im vorgegebenen Rahmen, so dass wichtige Komponenten der Solaranlage, beispielsweise der Kollektor und das Rohrsystem, nicht mehr übermäßig belastet werden. Die gesamte thermische Belastung des Solarkreises wird reduziert. Schäden am System werden wirksam vermieden.

Vorteilhafterweise verwendet man als Speichermedium Wasser, da der Verdampfungsbereich von Wasser innerhalb des von Solaranlagen normalerweise erreichbaren Temperaturbereiches liegt. Die von dem Speichermedium zusätzlich aufgenommene Wärme wird durch gezielte Kondensation des in dem Behälter entstehenden Dampfes an die Umgebung abgegeben. Somit stellt das Speichermedium ein Transportmittel für die überschüssige Wärme dar.

Das kondensierte Speichermedium wird nach der Wärmeabfuhr vollständig zurück gewonnen, so dass eine Nachspeisung von zusätzlichem Speichermedium nicht erforderlich ist. Die Speichereinrichtung bildet vielmehr ein in sich geschlossenes System, das auch in bereits bestehenden solarthermischen Anlagen problemlos nachgerüstet werden kann, indem ein vorhandener herkömmlicher Speicher durch eine erfindungsgemäße Speichereinrichtung ausgetauscht wird.

Eine vorteilhafte Ausgestaltung der Erfindung sieht vor, dass der Behälter zumindest abschnittsweise einen Teil der Kondensationseinrichtung bildet. Dadurch entsteht nicht nur eine äußerst kostengünstige Lösung. Die Integration der Kondensationseinrichtung in den Behälter ermöglicht zudem eine kompakte Bauform der Speichereinrichtung. Hierbei ist es günstig, wenn der Behälter eine Behälterwandung und ein Dach aufweist, wobei die Innenfläche der Behälterwandung und/oder des Daches zumindest abschnittsweise die Kondensationsfläche bilden. Das Dach (oder-je nach Größe des Behälters - auch ein Deckel) ist bevorzugt kegelförmig oder domartig ausgebildet, d.h. es bildet eine Art Kuppel oder Dom, in dem sich innerhalb des Behälters aufsteigender Dampf gezielt sammeln kann.

Die Erfindung sieht weiter vor, dass die Kühlvorrichtung über der Außenfläche der Behälterwandung und/oder des Daches des Behälters angeordnet ist Dieser wird dadurch stets optimal gekühlt, so dass sich innerhalb des Behälters entstehender Dampf an der Kondensationsfläche niederschlagen und kondensieren kann. Hierbei wird die Wärmeenergie von dem Dampf auf den Behälter und von dem Behälter auf die Kühlvorrichtung übertragen. Letztere entzieht mithin der Speichereinrichtung überschüssige Wärmeenergie, die mithin sofort wieder in der Lage ist, weitere Wärmeenergie von dem Wärmeträger des Solarkreises aufzunehmen. Um den Kondensationseffekt zu erhöhen, kann -je nach Ausgestaltung des Behälters - neben dem Dach auch ein Teil der Behälterwandung als Kondensationsfläche dienen.

Die Kühlvorrichtung ist bevorzugt als passive Luftkühlung ausgebildet. Sie hat zweckmäßig einen Konvektionsturm der dafür sorgt, dass im Bereich der Behälterwandung und/oder über dem Dach eine kühlende Luftströmung entsteht, die das Dach bzw. die Behälterwandung und mithin die Kondensationsfläche der Kondensationseinrichtung kühlt. Gesonderte oder zusätzliche Lüfter oder Pumpen sind nicht erforderlich, so dass die Speichereinrichtung keine Fremdenergie benötigt. Dennoch ist es - je nach Größe des Heizsystems - möglich auch eine aktive Kühlung vorzusehen, indem ein Gebläse oder ein Kälteaggregat eingesetzt wird, um dem Behälter, insbesondere dessen Wandung oder Dach, die aufgenommene Wärmeenergie zu entziehen.

Diese Zwischenwand erfüllt zunächst eine Isolationsfunktion. Sie trennt den Kondensationsbereich von dem Verdampfungsbereich, d.h. die Kondensationsfläche wird gegenüber dem Speichermedium thermisch getrennt. Der in dem Behälter der Speichereinrichtung aufsteigende Dampf kann stets optimal an der Kondensationsfläche des Daches kondensieren.

Ferner erfüllt die Zwischenwand eine Leitfunktion, indem das verdampfte Speichermedium gezielt über die Kondensationsfläche geleitet wird.

Überdies hat die Zwischenwand eine Sammelfunktion: sie fängt das von der Kondensationsfläche abtropfende Kondensat auf und führt dieses gezielt in den Speicher zurück, so dass keine Verluste auftreten. Weder geht gespeicherte Wärmeenergie verloren, noch muss das Speichermedium nachgefüllt werden.

Die Geometrie bzw. Ausgestaltung der Zwischenwand entspricht bevorzugt der Geometrie und Ausgestaltung des Behälters, wobei die Zwischenwand bevorzugt parallel zu der Behälterwandung und/oder dem Dach angeordnet ist. Zudem kann die Zwischenwand auf seiner dampfbereichseitigen Fläche wärmedämmend ausgeführt oder mit einer Wärmedämmung versehen sein, so dass eine direkte Wärmeübertragung durch Wärmeabstrahlung des flüssigen Speichermediums auf die gekühlte Kondensationsfläche wirksam vermieden wird.
Die Zwischenwand ist vorteilhaft in einem Abstand zur Kondensationsfläche des Behälters angeordnet, wobei der Abstand derart bemessen ist, dass zum einen der über die Kondensationsfläche geleitete Dampf ungehindert kondensieren kann und gleichzeitig das dabei entstehende Kondensat auf der Zwischenwand in Richtung Speichermedium abgeführt werden kann.

Um die Leitfunktion der Zwischenwand zu verbessern ist in dieser eine Öffnung vorgesehen. Durch diese kann der Dampf gezielt aus dem Dampfbereich in den Kondensationsbereich einströmen.

Um darüber hinaus die Notkühlfunktion der Kondensationseinrichtung steuern zu können, ist die Öffnung mittels einer Ventileinrichtung verschließbar. Dadurch kann das Eintreten von Dampf in den Kondensationsbereich gezielt gesteuert werden, d.h. je nach herrschenden Temperaturen in der Solaranlage kann ein Öffnen der Ventileinrichtung bewirkt oder verhindert werden. Öffnet das Ventil, beispielsweise ab einem bestimmten über der Oberfläche des Speichermediums herrschenden Dampfdruck, kann der Dampf durch die Öffnung hindurch in den Kondensationsbereich einströmen, wobei die Zwischenwand den Dampf an der Kondensationsfläche entlang führt. Der Dampf kühlt ab, kondensiert und wird als Kondensat in das Speichermedium zurückgeführt. Dieses kann bei anhaltender oder vermehrter Sonneneinstrahlung weitere Wärmeenergie von dem Wärmeträger aus dem Kollektorkreis aufnehmen. Bei verminderter Solareinstrahlung kann die Ventileinrichtung die Öffnung wieder verschließen, so dass die in das Speichermedium eingetragene Energie gespeichert wird.

Die Ventileinrichtung umfasst beispielsweise ein federbelastetes, druckempfindliches oder schraubbares Ventil oder eine elastische Membran zum Öffnen und Schließen der Öffnung in der Zwischenwand, die bei diesen Ausführungsformen in dem Behälter fixiert ist. Das Schließen bzw. Öffnen der Ventileinrichtung kann in einer Ausführungsform passiv erfolgen, beispielsweise durch einfache Reaktion der Ventileinrichtung auf die Verhältnisse im Behälterinnenbereich, die vom Dampfdruck und/oder von der Temperatur bestimmt werden. In einer anderen Ausführungsform kann die Ventileinrichtung aktiv gesteuert werden, beispielsweise manuell oder automatisiert. Die Steuerung ist dann u. a. an Tages- und Nachtzeiten und/oder an die Witterungsverhältnisse anpassbar.

In einer anderen Ausführungsform ist die Zwischenwand auf dem Speichermedium schwimmend gelagert, wobei die Zwischenwand zweckmäßig einen Teil der Ventileinrichtung bildet und die Öffnung in der Zwischenwand von einem innerhalb des Behälters feststehenden Ventilkörper verschlossen wird. In abgesenkter Stellung liegt dabei der Rand der Öffnung derart auf dem Ventilkörper auf, dass kein Dampf durch die Öffnung hindurch strömen kann. Bei steigendem Dampfdruck im Dampfbereich wird die schwimmende Zwischenwand angehoben und in Richtung Kondensationsfläche gedrückt. Dadurch wird die die Öffnung in der Zwischenwand freigegeben und das dampfförmige Speichermedium kann in den Kondensationsbereich einströmen.

Eine weitere Ausführungsform der Erfindung sieht vor, dass die Kondensationsfläche, die Behälterwandung, das Dach und/oder die Kühlvorrichtung innen und/oder außen mit oberflächenvergrößernden Elementen versehen sind. Dadurch entstehen eine größere Fläche und damit eine größere Wärmeübertragung z.B. von dem kondensierten Speichermedium auf das Dach des Behälters. Die flächenvergrößernden Elemente sind vorteilhafterweise so ausgebildet, dass die Wärmeaufnahme und -abfuhr begünstigt werden.

Man erkennt, dass die erfindungsgemäße Speichereinrichtung mit der Kondensationseinrichtung eine Art Notkühlung bereitstellt, welche -je nach Ausführungsform - ohne Hilfsenergie auskommt, die Effektivität der Solaranlage erhöht und die Robustheit und Lebensdauer von zentralen Komponenten der Solaranlage verlängert.

Eine thermische Solaranlage mit einer entsprechenden erfindungsgemäßen Speichereinrichtung erreicht vorteilhaft nicht die hohen Temperaturen einer Stagnationsphase. Durch die Kondensationseinrichtung ist vielmehr eine ständige Wärmeabfuhr möglich und es nicht mehr notwendig, abzuwarten, bis die Solaranlage von den hohen Temperaturen der Stagnationsphase, also circa 200 °C, auf das gewünschte Temperaturniveau von circa 100 °C abgekühlt ist. Weiterhin ist die erfindungsgemäße Solaranlage vorteilhafterweise sehr robust und langlebig, da die thermische Belastung aller Komponenten des Systems deutlich gesenkt ist.

Sowohl das erfindungsgemäße Verfahren als auch die erfindungsgemäße Speichereinrichtung können nicht nur in solarthermischen Systemen vorteilhaft eingesetzt werden. Möglich ist auch der Einsatz in Heizsystemen, die Wärmeerzeuger mit nicht schnell regelbarer Feuerung verwenden, z.B. Festbrennstoffkessel. Diese müssen gemäß DIN EN 12828 mit besonderen Temperaturbegrenzern für eine Notkühlung ausgerüstet werden, z.B. thermische Ablaufsicherungen und/oder separate Sicherheitswärmetauscher, was jedoch meist zusätzliche Kosten verursacht.

Eine solche Notkühlung wird benötigt, wenn die vorgesehene Speichereinrichtung ausgeschöpft ist, der Festbrennstoffkessel jedoch aufgrund des bereits eingefüllten Festbrennstoffs (z.B. Scheitholzfüllung oder Koksfüllung) zwangsweise weiter Wärmeenergie liefern muss. Mit Hilfe des erfindungsgemäßen Verfahrens kann diese überschüssige Wärmeenergie problemlos aufgenommen und an die Umgebung abgeführt werden, ohne dass es innerhalb des Heizsystems zu Problemen oder Störungen kommt Die erfindungsgemäße Speichereinrichtung sorgt zudem dafür, dass der ausgewählte Heizkreis deutlich kleiner dimensioniert werden kann, was beispielsweise bei einer Fußbodenheizung von Vorteil ist, die gewöhnlich nicht für hohe Temperaturen geeignet ist. Das gesamte Heizsystem lässt sich mithin äußerst kostengünstig ausführen.

Die Zeichnungen stellen verschiedene Ausführungsbeispiele der Erfindung dar und zeigen in den Figuren:
- Fig. 1: eine schematische Querschnittsansicht einer erfindungsgemäßen Speichereinrichtung mit einer erfindungsgemäßen Kondensationseinrichtung in einer ersten Ausführungsform;
- Fig. 2: eine schematische Querschnittsansicht einer erfindungsgemäßen Speichereinrichtung mit einer erfindungsgemäßen Kondensationseinrichtung in einer weiteren Ausführungsform;
- Fig. 3: eine schematische Querschnittsansicht einer erfindungsgemäßen Speichereinrichtung mit einer erfindungsgemäßen Kondensationseinrichtung in einer weiteren Ausführungsform;
- Fig. 4: eine schematische Querschnittsansicht einer erfindungsgemäßen Speichereinrichtung mit einer erfindungsgemäßen Kondensationseinrichtung in einer weiteren Ausführungsform.

Das erfindungsgemäße Verfahren wird vorteilhaft in einem (nicht dargestellten) solarthermischen System angewendet, beispielsweise in einer thermischen Solaranlage, die mittels eines Wärmeträgers Wärmeenergie aufnimmt und diese in ein Speichermedium 32 einbringt, das in einem Behälter 21 gespeichert ist. Sobald das Speichermedium 32 seine Verdampfungstemperatur erreicht oder- bei weiterem Energieeintrag - überschreitet, verdampft es innerhalb des Behälters und gelangt mit den Innenflächen des Behälters 21 in Kontakt. Dabei überträgt es mittels Kondensation seine Wärmeenergie auf den Behälter 21, der wiederum die aufgenommene Wärmeenergie an die Umgebung abgibt. Der über die Innenflächen des Behälters geführte und kondensierte Dampf wird anschließend zurück in den Behälter geführt, so dass ein in sich geschlossener Kreislauf entsteht. Um die Kondensation zu fördern bzw. zu verstärken, wird der Behälter passiv oder aktiv gekühlt. Ferner wird die Menge, der von dem dampfförmigen Speichermedium 32 an den Behälter 21 abgeführten Wärmeenergie geregelt und/oder gesteuert.

Für die Durchführung des erfindungsgemäßen Verfahrens ist eine erfindungsgemäße Speichereinrichtung 200 vorgesehen, die in der thermischen Solaranlage als Wärmespeicher eingesetzt wird. Die Speichereinrichtung 200 ist in an sich bekannter Weise in das System eingebunden und über Anschlüsse und Rohrleitungen die (gleichfalls nicht gezeigten) Sonnenkollektoren angeschlossen. In den Sonnenkollektoren und den Rohrleitungen zirkuliert der Wärmeträger. Dieser nimmt innerhalb der Sonnenkollektoren Wärmeenergie auf und gibt diese - gewöhnlich über einen Wärmetauscher - an die Speichereinrichtung 200 ab, die hierzu mit dem Speichermedium 32 befüllt ist. Der Kreislauf der Anlage wird mittels einer Pumpe oder mittels Auftrieb und Schwerkraft betrieben.

Jede Speichereinrichtung 200 hat zur Aufnahme des Speichermediums 32 einen Behälter 21, der mit einer im Wesentlichen zylindrischen Behälterwandung 22, einem kegelförmigen oder domartigen Dach 24 und einem Boden 27 einen abgedichteten Behälterinnenbereich 23 bildet. Das Speichermedium 32 ist beispielsweise Wasser, das sich im unteren Bereich des Behälterinnenbereiches 23 befindet.

Um innerhalb des thermischen Systems überschüssige Wärmeenergie, die von dem Wärmeträger in das Speichermedium 32 eingebracht wird, aufnehmen und abführen zu können, ist das kegelförmige Dach 24 des Behälters 21 als Teil einer Kondensationseinrichtung 100 ausgebildet. Diese umfasst neben dem Dach 24 - das mit seiner Innenfläche eine Kondensationsfläche 10 bildet - eine im Behälter 21 angeordnete ebenfalls kegelförmige oder domartige Zwischenwand 26 sowie eine oberhalb des Daches 24 angeordnete Kühlvorrichtung 50.

Die Zwischenwand 26 ist in einem Abstand zur Innenfläche 10 des Daches 24 montiert, so dass zwischen dem Dach 24 und der Zwischenwand 26 ein Zwischenraum vorhanden ist. Dieser ist derart dimensioniert, dass im Behälterinnenbereich 23 des Behälters 21 verdampfendes Speichermedium 32 innerhalb des Zwischenraums an der Kondensationsfläche 10 des Daches 24 kondensieren und als Kondensat 33 an der Zwischenwand 26 ablaufen kann. Dabei überträgt das verdampfte Speichermedium 32 seine Wärmeenergie auf das Dach 24, das von der Kühlvorrichtung 50 gekühlt wird. Damit der Dampf 31 gezielt der Kondensationsfläche 10 zugeführt und daran entlang geleitet werden kann, bildet die kegelförmige oder domartige Zwischenwand 26 in ihrem oberen Bereich eine Öffnung 28.

Die aus einem Material mit geringer Wärmeleitfähigkeit und geringer Dichte gefertigte Zwischenwand 26 bildet sowohl eine Art Leitblech als auch eine thermische Trennung, denn sie unterteilt den oberen Bereich des Behälterinnenbereiches 21 in einen Dampfbereich 25, der unterhalb der Zwischenwand 26 liegt, und einen Zwischenraum, der zwischen der Zwischenwand 26 und der Kondensationsfläche 10 des Daches 24 einen Kondensationsbereich bildet. Sie stellt mithin eine Grenze zwischen dem Kondensationsbereich und dem Dampfbereich 25 dar.

Um den Kondensationseffekt weiter zu verbessern, kann die Zwischenwand 26 auf der dampfbereichseitigen Fläche eine (nicht dargestellte) Wärmedämmung aufweisen. Dadurch wird eine Wärmeübertragung durch Abstrahlung in den Kondensationsbereich 10 unterbunden.

Je nach Größe und Ausgestaltung des Behälters 21 können auch Teile der Behälterwandung 22 als Kondensationsfläche dienen. Auch muss das Dach 24 des Behälters 21 nicht zwingend kegelförmig oder Domartig ausgebildet sein. Andere geeignete Dach- bzw. Wandformen sind ebenso möglich.

Die von dem Dach 24 aufgenommene Wärmeenergie wird über die Kühlvorrichtung 50 abgeführt. Diese hat hierzu einen Luftführungskanal 51 zum Leiten einer Luftströmung im oberen Bereich der Kondensationseinrichtung 100. Der Luftführungskanal 51 umfasst über dem Dach 24 Einlässe 52, die als umlaufender Spalt oder als diskrete, über den Umfang verteilte Öffnungen ausgebildet sein können. Ein Auslass 54 führt die von dem Dach 24 erwärmte Luft nach oben ab.

Man erkennt, dass die Einlässe 52 auf einem horizontal tiefer gelegenen Niveau angeordnet sind als der Auslass 53. Dadurch wirkt der Luftführungskanal 51 als Konvektionsturm in Form eines Kamins bzw. Luftabzugs mit natürlicher Konvektion. Die Einlässe 52 sind jedoch weiterhin über dem Dach 24 und damit über der Kondensationsfläche 10 der Kondensationseinrichtung 100 positioniert. Die durch den Luftführungskanal 51 hindurchströmende Luft nimmt dadurch die von dem Dach 24 aufgenommene Wärmeenergie auf und transportiert diese durch den Auslass 53 hindurch weg. Die nachströmende Luft kühlt das Dach 24 von außen ab. Die Kühlung erfolgt also zum einen durch den Abtransport der abgeführten Wärme und zum anderen durch die nachströmende Luftströmung. Ein zusätzlicher Antrieb oder eine elektrisch betriebene Lüftungs- oder Kühlvorrichtung ist mithin nicht notwendig.

Das an der Innenwand des Daches 24 bzw. an der Kondensationsfläche 10 entstehende und abgekühlte Kondensat 33 wird von der Zwischenwand 26 aufgefangen, nach unten abgeleitet und seitlich im Bereich der Behälterwandung 22 wieder dem Speichermedium 32 zugeführt.

Um den Wärmeübergang von dem innerhalb des Behälters 21 verdampfenden und in dem Zwischenraum kondensierenden Speichermedium 32 auf das Dach 24 und von diesem auf die Kühlvorrichtung 50 weiter zu verbessern, kann das kegelförmige Dach 24 innen und/oder außen mit (nicht dargestellten) oberflächenvergrößernden Elementen versehen sein. Hierbei handelt es sich beispielsweise um Rillen, Rippen, Noppen, Stifte o.dgl., die auf das Dach 24 aufgesetzt oder mit diesem einstückig sind. Durch die Elemente wird eine größere Oberfläche und damit eine größere Wärmeübertragung bereitgestellt.

Die Funktionsweise der erfindungsgemäßen Speichereinrichtung 200 stellt sich gemäß dem erfindungsgemäßen Verfahren wie folgt dar:
Sobald die Speicherkapazität des Speichermediums 32 im Behälter 21 erschöpft ist, der Wärmeträger aufgrund anhaltender Sonneneinstrahlung über die Solarkollektoren jedoch weiter Wärmeenergie in den Speicher einbringt, beginnt das Speichermedium 32 zu verdampfen. Der dabei entstehende Dampf 31 steigt in den Dampfbereich 25 auf und wird dort durch die Öffnung 28 hindurch von der Zwischenwand 26 über die Kondensationsfläche 10 des Daches 24 geführt. Weil dieses von der Kühlvorrichtung 50 gekühlt wird, schlägt sich der Dampf 31 an der relativ kalten Kondensationsfläche 10 des Daches 24 nieder und tropft als Kondensat 33 auf die Zwischenwand 26. An dieser läuft das Kondensat 33 nach unten ab und gelangt - entsprechend abgekühlt - in das Speichermedium 32 zurück, so dass dieses bei Bedarf weitere Energie von dem Wärmeträger aus dem Kollektorkreis aufnehmen kann.

Damit verhindert die erfindungsgemäße Speichereinrichtung 200, dass der Wärmeträger im Kollektorkreis aufgrund der anhaltenden Sonneneinstrahlung verdampft und es dadurch innerhalb des Systems zur Stagnation kommt.

Das bei herkömmlichen Anlagen auftretende Verdampfen im Kollektorkreis wird bei der erfindungsgemäßen Lösung quasi in den Speicherbereich verlagert, so dass nicht der Wärmeträger verdampft, sondern das Speichermedium 32. Diesem wird mittels der Kondensationseinrichtung 100 die überschüssige Wärmeenergie entzogen, wobei die Energie zunächst über das dampfförmige Speichermedium 31 auf das Dach 24 übertragen wird, welches anschließend von der Kühlvorrichtung 50 gekühlt wird. Die dabei entstehende Abwärme gelangt entweder ins Freie oder sie kann anderweitig genutzt werden, beispielweise zur Erwärmung anderer Prozesse, zur Stromerzeugung oder zum Betrieb einer Wärmekraftmaschine.

Damit kann aber innerhalb des Systems keine Stagnation mehr auftreten. Sobald der Wärmeträger innerhalb des Kollektorkreises mehr Wärme aufnimmt als der Speicher an sich aufnehmen oder die angeschlossenen Verbraucher entnehmen können, beginnt das Speichermedium 32 innerhalb des Behälters 21 zu verdampfen. Die zusätzlich eingebracht Energie wird über die Kondensationseinrichtung 100 bzw. über deren Kühlsystem 50 abgeführt. Dies kann bei Bedarf durch die oberflächenvergrößernden Elemente des Daches 24 begünstigt werden.

Durch geeignete Gestaltung von Behälterwandung 22 und Dach 24 kann durchaus eine ausreichende Kondensation des verdampfenden Speichermediums 32 erreicht werden. Die Zwischenwand 26 begünstigt jedoch den Kondensationsvorgang, weil sie den Dampf 31 gezielt über die Kondensationsfläche 10 des Daches 24 lenkt und eine thermische Trennung zum Dampfbereich 25 bildet. Ferner wird das Kondensat 33 von der Zwischenwand 26 gezielt aufgefangen und im Randbereich des Behälters 21 dem Speichermedium 32 zugeführt, das dadurch in der Mitte des Behälters 21 ungehindert verdampfen kann.

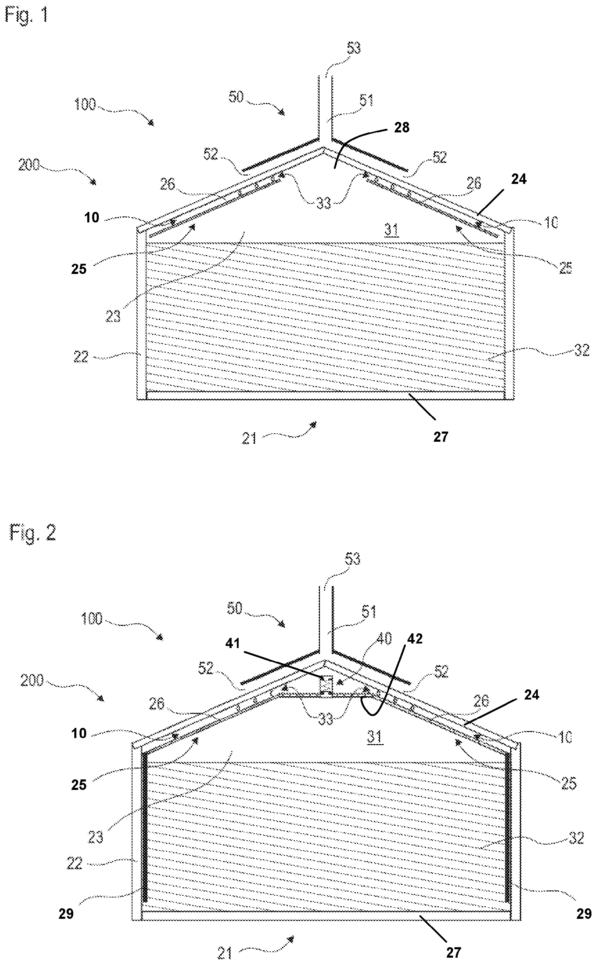

Der grundsätzliche Aufbau der Ausführungsformen der Fig. 2 bis 4 entspricht der bereits in der Fig. 1 beschriebenen Ausführungsform. Auf eine nähere Beschreibung wird deswegen verzichtet. Gleiche Bezugszeichen kennzeichnen gleiche Bauteile.

Fig. 2 zeigt eine schematische Querschnittsansicht einer erfindungsgemäßen Speichereinrichtung 200, die ebenfalls mit einer Kondensationseinrichtung 100 als Notkühlung versehen ist.

Um das Verdampfen des Speichermediums 32 im Behälterinnenbereich 23 weiter zu optimieren, erfolgt bei der Ausführungsform von Fig. 2 die Ableitung des Kondensats 33 von der Zwischenwand 26 in das flüssige Speichermedium 32 über randseitig ausgebildete Rohre 29, die wie Fallrohre vertikal vor der Behälterwandung 22 angeordnet sind und an dieser befestigt sein können. Die Rohre 29 enden knapp über dem Boden 27, wo die Temperatur des Speichermediums gewöhnlich am niedrigsten ist. Dadurch wird das gekühlte Kondensat 33 weit unten im Behälter 21 dem Speichermedium 32 zugeführt, das mithin im Innenbereich des Behälters 21 ungehindert verdampfen kann.

Weiterhin umfasst die Kondensationseinrichtung 100 der Speichereinrichtung 200 von Fig. 2 eine Ventileinrichtung 40, welche die obere Öffnung 28 in der Zwischenwand 26 verschließt, so dass der Dampfbereich 25 vollständig von dem Kondensationsbereich zwischen der Zwischenwand 26 und der gekühlten Kondensationsfläche 10 des Daches 24 getrennt ist. Dadurch werden Wärmeverluste des Speichers im Standardbetrieb weiter reduziert.

Um die Sicherungs- bzw. Notkühlungsfunktion der mit einer Kondensationseinrichtung 100 versehenen Speichereinrichtung 200 zu gewährleisten, hat die Ventileinrichtung 40 ein Federventil 41, das auf einer Platte 42 montiert ist. Letztere ist dicht in die Öffnung 28 der kegelförmigen oder domartigen Zwischenwand 26 eingesetzt.

Mittels der Ventileinrichtung 40 erfolgt ein gezieltes Einlassen von dampfförmigem Speichermedium 31 aus dem Dampfbereich 25 in den Kondensationsbereich, so dass die abgeführte Wärmemenge steuerbar ist, d.h. eine Kondensation des Dampfes 31 und mithin ein Austrag der überschüssigen Energie erfolgt erst ab einem bestimmten Schwellenwert, der über die Ventileinrichtung 40 bzw. das Federventil 41 einstellbar ist, denn das Ventil 41 öffnet erst ab einem bestimmten Dampfdruck innerhalb des Behälters 21 bzw. über der Oberfläche des Speichermediums 32.

Öffnet die Ventileinrichtung 40 strömt der Dampf 31 durch das Ventil 41 hindurch, wobei die Zwischenwand 26 den Dampf 31 an der gekühlten Kondensationsfläche 10 entlang leitet, so dass Kondensat 33 entsteht, das über die Zwischenwand 26 und die Rohre 29 in das Speichermedium 32 zurückgeführt wird. Die von dem Dach 24 aufgenommene überschüssige Energie wird von der Kühlvorrichtung 50 nach außen abgeführt.

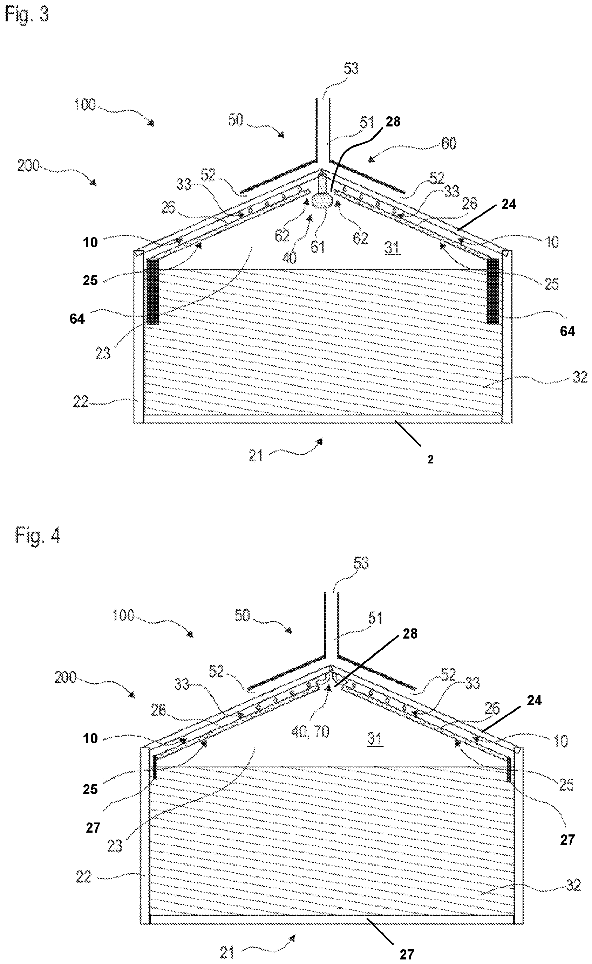

Die Ausführungsform der Fig. 3 verzichtet auf ein Federventil 41. Die Ventileinrichtung 40 wird vielmehr von der Zwischenwand 26 selbst und einem kugel- oder tellerförmigen Ventilkörper 61 gebildet, der die Öffnung 28 in der Zwischenwand 26 verschließen kann. Letztere ist randseitig mit Schwimmkörpern 64 versehen, die in dem Speichermedium 32 schwimmen, wobei das Gewicht der Zwischenwand 26 und der Auftrieb der Schwimmkörper 64 im Speichermedium 32 derart bemessen sind, dass die Zwischenwand im Normalbetrieb des solarthermischen Systems mit dem Rand 62 der Öffnung 28 auf dem Körper 61 dicht aufliegt, so dass kein Dampf 31 durch die Öffnung 28 hindurch treten kann. Der Rand 62 kann hierbei zusätzlich mit Dichtelementen versehen sein.

Wird von dem Wärmeträger überschüssige Wärmeenergie in das Speichermedium 32 eingetragen, verdampft dieses innerhalb des Behälters 21 und der im Dampfbereich 25 entstehende Dampfdruck hebt die Zwischenwand 26 an, so dass sich diese von dem Körper 61 abhebt. Die Öffnung 28 wird freigegeben und der Dampf 31 kann an der Kondensationsfläche 10 des Daches kondensieren. Die überschüssige Energie wird mittels der Kühlvorrichtung 50 aus dem System abgeleitet. Das entstehende Kondensat 33 wird von der Zwischenwand 26 aufgefangen und randseitig in das Speichermedium 32 zurückgeführt, wobei auch hier bei Bedarf die Rohre 29 der Fig. 2 verwendet werden können. Der Schwellenwert des Dampfdruckes, ab dem die Ventileinrichtung 40 öffnet, wird ebenfalls über das Gewicht der Zwischenwand 26 und dem Auftrieb der Schwimmkörper 64 im Speichermedium 32 definiert.

Man erkennt, dass die Zwischenwand 26 eine freibewegliche schwimmende Kuppel 60 bildet, die sowohl eine Wärmeschutzfunktion als auch eine Ventilfunktion ausübt. Sie wird von dem Dampf 31 angehoben und nach dessen Entweichen durch die Öffnung 28 wieder abgesenkt. Hierbei bilden die Schwimmkörper 64 zusammen mit der Behälterwandung 22 Führungselemente, die dafür sorgen, dass die Zwischenwand 26 stets zentriert innerhalb des Behälters 21 geführt ist. Bei Bedarf kann auch der Ventilkörper 61 als Führungselement dienen oder man bildet separate Führungen im Behälter 21 aus. Die Fig. 3 zeigt die Ventileinrichtung 40 im geöffneten Zustand.

In Fig. 4 ist die Zwischenwand 26 starr in den Behälter 21 eingesetzt und beispielsweise mit randseitigen Stegen 27, zwischen denen hindurch das Kondensat 33 in das Speichermedium 32 abfließen kann, mit der Behälterwandung 22 verbunden.
Die Ventileinrichtung 40 ist als elastisches Ventil, insbesondere als Membran 70 ausgeführt, welche die obere Öffnung 28 in der kegel- oder domförmigen Zwischenwand 26 verschließt, indem sich (nicht näher bezeichnete) Lippen oder Lamellen der Membran 70 dichtend auf den (ebenfalls nicht näher bezeichneten) Randbereich der Öffnung 28 auflegen.

Im Normalbetrieb der thermischen Solaranlage, also bei keinem oder sehr geringem Dampfdruck im Behälterinnenbereich 23 verschließt die Membran 70 die Öffnung 28 durch ihr Eigengewicht und/oder ihre Eigenspannung. Der Dampf 31 kann nicht zur Kondensationsfläche 10 vordringen. Die Zwischenwand 26 und die die Membran 70 isolieren vielmehr das Speichermedium 32 gegenüber dem gekühlten Dach 24. Steigt der Dampfdruck im Dampfbereich 25, wird ab einem bestimmten Dampfdruck die Membran 70 aufgedrückt und der Dampf 31 kann durch die Öffnung 28 hindurch strömen und an der Kondensationsfläche 10 kondensieren, wobei die Zwischenwand 26 den Dampf 31 an der Kondensationsfläche 10 entlang führt. Die überschüssige Energie wird mittels der Kühlvorrichtung 50 aus dem System abgeleitet. Das entstehende Kondensat 33 wird von der Zwischenwand 26 aufgefangen und randseitig in das Speichermedium 32 zurückgeführt, wobei auch hier bei Bedarf die in Fig. 2 gezeigten Rohre verwendet werden können.

Die kegel- oder domartige Zwischenwand 26 hat auch in dieser Ausführungsform mehrere Funktionen.

Zum einen dient die Zwischenwand 26 als thermisches Isolationselement, das die von der Kühlvorrichtung 50 gekühlte Kondensationsfläche 10 des Daches 24 gegenüber dem meist erwärmten Speichermedium 32 im Behälter 21 abschirmt. Die Wärmeverluste der Speichereinrichtung 200 werden dadurch minimiert.

Zum anderen wird mittels der Zwischenwand 26 in Verbindung mit der Ventileinrichtung 40 der in dem Behälterinnenbereich 23 entstehende Dampf 31 gezielt der in der Speichereinrichtung 200 integrierten Kondensationseinrichtung 100 zugeführt, die dafür sorgt, dass überschüssige Energie aus dem System abgeführt werden kann. Dadurch wird verhindert, dass der in den Sonnenkollektoren zirkulierende Wärmeträger nicht verdampfen kann, sollte die Sonneneinstrahlung mehr Energie liefern als das Gesamtsystem auf- bzw. abnehmen kann. Der Wärmeträger kann vielmehr stets seine Energie an das Speichermedium 32 abgeben, dem bei Bedarf die überschüssige Energie entzogen wird. Eine Stagnation im Solarkreis wird damit wirksam vermieden.
Ferner dient die Zwischenwand 26 zur Rückführung des verdampften und kondensierten Speichermediums 32, womit das System ohne jede Hilfsenergie und ohne Frischwassernachspeisung auskommt, was sich weiter günstig auf die Energiebilanz auswirkt.

In einem weiteren (nicht dargestellten) Ausführungsbeispiel wird die Kühlfunktion der erfindungsgemäßen Speichereinrichtung 200 als Notkühlung in einem Festbrennstoff-Heizsystem eingesetzt. Die Möglichkeit der Notkühlung ist für manche Festbrennstoffsysteme vorgeschrieben, insbesondere dann, wenn die Feuerung nicht schnell regelbar bzw. anpassbar ist. Dies ist z.B. regelmäßig dann der Fall, wenn der Feststoffbrennkessel mit Scheitholz oder Koks befüllt wird.

Ist der eingefüllte Brennstoffvorrat noch nicht erschöpft, der Wärmebedarf seitens der Verbraucher jedoch bereist gedeckt, kann die überschüssig erzeugte Energie jederzeit problemlos von der erfindungsgemäßen Speichereinrichtung 200 aufgenommen werden. Sollte deren Speicherkapazität bereits erschöpft sein, verdampft das Speichermedium 32 innerhalb des Behälters 21 und gibt anschließend die überschüssige Energie durch Kondensation des Dampfes an den in dem Behälter 21 ausgebildeten Kondensationsflächen 10 an den Behälter 21 ab. Dieser wird von der Kühlvorrichtung 50 gekühlt, so dass die von dem Behälter 21 aufgenommene Energie sofort abgeführt wird. Der kondensierte Dampf gelangt als Speichermedium 32 zurück in den Behälter 21 und kann dort erneut Energie aufnehmen, sollte der Festbrennstoff weiter Energie liefern.

Aufwendige Pufferspeicher oder teure Ablaufsicherungen sowie separate Sicherheitswärmetauscher sind nicht mehr notwendig. Das gesamte Heizsystem lässt sich mit Hilfe der erfindungsgemäßen Speichereinrichtung 200 äußerst kostengünstig realisieren.

## Patentansprüche

1. Verfahren zum Abführen von Wärmeenergie aus einer Speichereinrichtung zur Speicherung von Wärmeenergie in einem Heizsystem nach einem der Ansprüche 5 bis 13 umfassend die Schritte:
a) Einbringen von Wärmeenergie, die von dem Heizsystem gewonnen und/oder erzeugt worden ist, in ein Speichermedium (32), das in einem Behälter (21) gespeichert wird, wobei das Speichermedium (32) seine Verdampfungstemperatur erreicht oder überschreitet;
b) Abgabe der von dem dampfförmigen Speichermedium (32) aufgenommenen Wärmeenergie an den Behälter (21) mittels Kondensation;
c) Abgabe der von dem Behälter (21) aufgenommenen Wärmeenergie an die Umgebung,
**dadurch gekennzeichnet, dass** das dampfförmige Speichermedium (32) an einer Innenfläche des Behälters (21) entlang geführt wird, wobei das dampfförmige Speichermedium gezielt durch einen Strömungskanal, der zwischen einer Kondensationseinrichtung und einer hierzu beabstandeten Zwischenwand ausgebildet ist, geleitet wird und an der Kondensationseinrichtung kondensiert.

2. Verfahren nach Anspruch 1,
**dadurch gekennzeichnet, dass** das dampfförmige Speichermedium (32) nach Abgabe der Wärmeenergie in den Behälter (21) zurückgeführt wird.

3. Verfahren nach einem der Ansprüche 1 oder 2,
**dadurch gekennzeichnet, dass** der Behälter (21) passiv oder aktiv gekühlt wird.

4. Verfahren nach einem der Ansprüche 1 bis 3,
**dadurch gekennzeichnet, dass** die Menge, der von dem dampfförmigen Speichermedium (32) an den Behälter (21) abgeführten Wärmeenergie, geregelt und/oder gesteuert wird.

5. Speichereinrichtung (200) zur Speicherung von Wärmeenergie in einem Heizsystem, mit einem Behälter (21), in dem ein Speichermedium (32) bevorratet ist, und mit einer Kondensationseinrichtung (100), wobei die Kondensationseinrichtung (100) zum Kondensieren von in dem Behälter (21) verdampfendem Speichermedium (32) eine Kondensationsfläche (10) aufweist, die mittels einer Kühlvorrichtung (50) kühlbar ist,
**dadurch gekennzeichnet, dass** zwischen dem Speichermedium (32) und der Kondensationsfläche (10) der Kondensationseinrichtung (100) eine Zwischenwand (26) vorgesehen ist, wobei die Zwischenwand (26) in einem Abstand zur Kondensationsfläche (10) des Behälters (21) angeordnet ist.

6. Speichereinrichtung nach Anspruch 5,
**dadurch gekennzeichnet, dass** der Behälter (21) zumindest abschnittsweise einen Teil der Kondensationseinrichtung (100) bildet.

7. Speichereinrichtung nach Anspruch 5 oder 6 ,
**dadurch gekennzeichnet, dass** der Behälter (21) eine Behälterwandung (22) und ein Dach (24) aufweist, wobei die Innenfläche der Behälterwandung (22) und/oder des Daches (24) zumindest abschnittsweise die Kondensationsfläche (10) bilden.

8. Speichereinrichtung nach Anspruch 7 ,
**dadurch gekennzeichnet, dass** die Kühlvorrichtung (50) über der Außenfläche der Behälterwandung (22) und/oder des Daches (24) des Behälters (21) angeordnet ist.

9. Speichereinrichtung nach Anspruch 5 bis 8,
**dadurch gekennzeichnet, dass** in der Zwischenwand (26) eine Öffnung (28) vorgesehen ist.

10. Speichereinrichtung nach Anspruch 9,
**dadurch gekennzeichnet, dass** die Öffnung (28) mittels einer Ventileinrichtung (40) verschließbar ist.

11. Speichereinrichtung nach einem der Ansprüche 5 bis 10,
**dadurch gekennzeichnet, dass** die Zwischenwand (26) in dem Behälter (21) fixiert ist.

12. Speichereinrichtung nach einem der Ansprüche 5 bis 11,
**dadurch gekennzeichnet, dass** die Zwischenwand (26) auf dem Speichermedium (32) schwimmend gelagert ist.

13. Speichereinrichtung nach einem der Ansprüche 7 bis 12,
**dadurch gekennzeichnet, dass** die Kondensationsfläche (10), die Behälterwandung (22), das Dach (24) und/oder die Kühlvorrichtung (50) innen und/oder außen mit oberflächenvergrößernden Elementen versehen sind.

14. Thermische Solaranlage mit einer Speichereinrichtung (200) nach einem der Ansprüche 5 bis 13.

15. Festbrennstoff-Heizsystem mit einer Speichereinrichtung (200) nach einem der Ansprüche 5 bis 13.

## Claims

1. Method for removing heat energy from a storage device for storing heat energy in a heating system according to one of Claims 5 to 13, comprising the following steps:
a) introducing heat energy which has been obtained and/or produced by the heating system into a storage medium (32) which is stored in a container (21), wherein the storage medium (32) reaches or exceeds its vaporization temperature;
b) discharging the heat energy received by the vaporous storage medium (32) to the container (21) by means of condensation;
c) discharging the heat energy received by the container (21) to the surroundings,
**characterized in that** the vaporous storage medium (32) is guided along an inner surface of the container (21), wherein the vaporous storage medium is guided in a targeted manner through a flow channel, which is formed between a condensation device and an intermediate wall spaced apart therefrom, and condenses on the condensation device.

2. Method according to Claim 1,
**characterized in that** the vaporous storage medium (32) is returned to the container (21) after discharge of the heat energy.

3. Method according to either of Claims 1 and 2,
**characterized in that** the container (21) is passively or actively cooled.

4. Method according to one of Claims 1 to 3,
**characterized in that** the amount of heat energy removed from the vaporous storage medium (32) to the container (21) is regulated and/or controlled.

5. Storage device (200) for storing heat energy in a heating system, having a container (21) in which a storage medium (32) is stored, and having a condensation device (100), wherein, in order to condense storage medium (32) which vaporizes in the container (21), the condensation device (100) has a condensation surface (10) which can be cooled by means of a cooling device (50),
**characterized in that** an intermediate wall (26) is provided between the storage medium (32) and the condensation surface (10) of the condensation device (100), wherein the intermediate wall (26) is arranged at a distance from the condensation surface (10) of the container (21).

6. Storage device according to Claim 5,
**characterized in that** the container (21) forms a part of the condensation device (100) at least in certain portions.

7. Storage device according to Claim 5 or 6,
**characterized in that** the container (21) has a container wall (22) and a roof (24), wherein the inner surface of the container wall (22) and/or of the roof (24) form the condensation surface (10) at least in certain portions.

8. Storage device according to Claim 7,
**characterized in that** the cooling device (50) is arranged above the outer surface of the container wall (22) and/or of the roof (24) of the container (21).

9. Storage device according to Claims 5 to 8,
**characterized in that** an opening (28) is provided in the intermediate wall (26).

10. Storage device according to Claim 9,
**characterized in that** the opening (28) can be closed by means of a valve device (40).

11. Storage device according to one of Claims 5 to 10,
**characterized in that** the intermediate wall (26) is fixed in the container (21).

12. Storage device according to one of Claims 5 to 11,
**characterized in that** the intermediate wall (26) is floatingly mounted on the storage medium (32).

13. Storage device according to one of Claims 7 to 12,
**characterized in that** the condensation surface (10), the container wall (22), the roof (24) and/or the cooling device (50) are provided on the inside and/or outside with surface-increasing elements.

14. Thermal solar installation having a storage device (200) according to one of Claims 5 to 13.

15. Solid fuel heating system having a storage device (200) according to one of Claims 5 to 13.

## Revendications

1. Procédé pour évacuer de l'énergie thermique hors d'un dispositif de stockage destiné à stocker de l'énergie thermique dans un système de chauffage selon l'une quelconque des revendications 5 à 13, comprenant les étapes suivantes:
a) introduire de l'énergie thermique, qui a été récupérée et/ou produite dans un système de chauffage, dans un milieu de stockage (32), qui est stocké dans un réservoir (21), dans lequel le milieu de stockage (32) atteint ou dépasse sa température d'évaporation;
b) céder l'énergie thermique captée par le milieu de stockage vaporisé (32) au réservoir (21) par condensation;
c) céder l'énergie thermique captée par le réservoir (21) à l'environnement,
**caractérisé en ce que** l'on conduit le milieu de stockage vaporisé (32) le long d'une face intérieure du réservoir (21), dans lequel le milieu de stockage vaporisé est conduit méthodiquement à travers un canal d'écoulement, qui est formé entre un dispositif de condensation et une paroi intermédiaire espacée de celui-ci, et se condense sur le dispositif de condensation.

2. Procédé selon la revendication 1, **caractérisé en ce que** l'on renvoie le milieu de stockage vaporisé (32) dans le réservoir (21) après la cession de l'énergie thermique.

3. Procédé selon une des revendications 1 ou 2, **caractérisé en ce que** l'on refroidit le réservoir (21) de façon passive ou active.

4. Procédé selon l'une quelconque des revendications 1 à 3, **caractérisé en ce que** l'on régule et/ou on commande la quantité de l'énergie thermique évacuée par le milieu de stockage vaporisé (32) vers le réservoir (21).

5. Dispositif de stockage (200) pour le stockage d'énergie thermique dans un système de chauffage, avec un réservoir (21), dans lequel un milieu de stockage (32) est accumulé, et avec un dispositif de condensation (100), dans lequel le dispositif de condensation (100) présente pour la condensation de milieu de stockage vaporisé (32) dans le réservoir (21) une face de condensation (10), qui peut être refroidie au moyen d'un dispositif de refroidissement (50), **caractérisé en ce qu'**il est prévu une paroi intermédiaire (26) entre le milieu de stockage (32) et la face de condensation (10) du dispositif de condensation (100), dans lequel la paroi intermédiaire (26) est disposée à une distance de la face de condensation (10) du réservoir (21).

6. Dispositif de stockage selon la revendication 5, **caractérisé en ce que** le réservoir (21) forme au moins partiellement une partie du dispositif de condensation (100).

7. Dispositif de stockage selon la revendication 5 ou 6, **caractérisé en ce que** le réservoir (21) présente une paroi de réservoir (22) et un toit (24), dans lequel la face intérieure de la paroi de réservoir (22) et/ou du toit (24) forme au moins partiellement la face de condensation (10).

8. Dispositif de stockage selon la revendication 7, **caractérisé en ce que** le dispositif de refroidissement (50) est disposé au-dessus de la face extérieure de la paroi de réservoir (22) et/ou du toit (24) du réservoir (21).

9. Dispositif de stockage selon l'une quelconque des revendications 5 à 8, **caractérisé en ce qu'**il est prévu une ouverture (28) dans la paroi intermédiaire (26).

10. Dispositif de stockage selon la revendication 9, **caractérisé en ce que** l'ouverture (28) peut être fermée au moyen d'un dispositif de soupape (40).

11. Dispositif de stockage selon l'une quelconque des revendications 5 à 10, **caractérisé en ce que** la paroi intermédiaire (26) est fixée dans le réservoir (21).

12. Dispositif de stockage selon l'une quelconque des revendications 5 à 11, **caractérisé en ce que** la paroi intermédiaire (26) est montée de façon flottante sur le milieu de stockage (32).

13. Dispositif de stockage selon l'une quelconque des revendications 7 à 12, **caractérisé en ce que** la face de condensation (10), la paroi de réservoir (22), le toit (24) et/ou le dispositif de refroidissement (50) sont munis intérieurement et/ou extérieurement d'éléments d'agrandissement de la surface.

14. Centrale thermique solaire avec un dispositif de stockage (200) selon l'une quelconque des revendications 5 à 13.

15. Système de chauffage à combustible solide avec un dispositif de stockage (200) selon l'une quelconque des revendications 5 à 13.
